# EUROPEAN PATENT SPECIFICATION

(11) **EP 1 293 130 B1**
(45) Date of publication and mention of the grant of the patent: **25.10.2006**
(21) Application number: 01941066.1
(22) Date of filing: 15.06.2001
(51) Int. Cl.: A23C 9/152, A23C 9/13, A23L 2/52, A23C 9/12, A23L 2/42

(54) **ACIDIC MILKY DRINK**
SAURES MILCHGETRAENK
BOISSON ACIDE A BASE DE LAIT

(30) Priority: 20.06.2000 JP 2000184322
(43) Date of publication of application: 19.03.2003
(73) Proprietor: Calpis Co., Ltd., Shibuya-ku, Tokyo 150-0021 (JP)
(72) Inventor: SOMOTO, Akishige, Yokohama-shi Kanagawa 240-0044 (JP); SHIMIZU, Kentaro, Machida-shi Tokyo 194-0045 (JP)
(74) Representative: Hallybone, Huw George
(86) International application number: PCT/JP2001/005118
(87) International publication number: WO 2001/097624

(56) References cited:
- JP-A- 5 304 887
- JP-A- 11 009 189
- JP-A- 63 084 446
- US-A- 5 026 833
- DATABASE WPI Section Ch, Week 199614 Derwent Publications Ltd., London, GB; Class D13, AN 1996-133383 XP002322671 & JP 08 023939 A (SANEIGEN FFI KK) 30 January 1996 (1996-01-30)
- DATABASE WPI Section Ch, Week 199801 Derwent Publications Ltd., London, GB; Class D13, AN 1998-002833 XP002322672 & JP 09 266767 A (MEIJI SEIKA KAISHA LTD) 14 October 1997 (1997-10-14)
- DATABASE WPI Section Ch, Week 200149 Derwent Publications Ltd., London, GB; Class D13, AN 2001-454219 XP002322673 & JP 2001 157547 A (YAKULT HONSHA KK) 12 June 2001 (2001-06-12)
- GIL M I ET AL: "Antioxidant activity of pomegranate juice and its relationship with phenolic composition and processing" JOURNAL OF AGRICULTURAL AND FOOD CHEMISTRY, AMERICAN CHEMICAL SOCIETY. WASHINGTON, US, vol. 48, no. 10, 15 September 2000 (2000-09-15), pages 4581-4589, XP002251851 ISSN: 0021-8561

## Description

The present invention relates to an acid milk-containing beverage in which deterioration of taste is reduced and preservation stability is improved.

It is known that the flavor and color of foods and beverages tend to be deteriorated with the lapse of time, due to the action of, e.g., heat, oxygen and light.

For reducing the deterioration of flavor and color, there have been made many proposals such as: contact of noble gas such as argon, neon, krypton and xenon with a beverage (JP-A-6-319497), an anti-deterioration method by addition of sunflower seed extract (JP-A-7-132073), an agent for reducing flavor deterioration of beverages containing at least one selected from the group consisting of chlorogenic acid, coffeic acid and ferulic acid together with an apple extract (JP-A-8-23939), an agent for preventing flavor deterioration of beverages containing one, two or more selected from the group consisting of sequestering agents, flavonols, and sunflower extract, and apple extract (JP-A-8-23940), a method for preventing flavor deterioration of foods and beverages by adding at least one selected from the group consisting of chlorogenic acid, coffeic acid and ferulic acid together with at least one selected from the group consisting of vitamin C, rutin and quercetin (Japanese Patent No.2704783), an agent for preventing flavor deterioration containing an solvent extract of natural products selected from the group consisting of eucalyptus, clove, myrobalan, strawberry, *Corni fructus, Geraniaceae Geranium,* pomegranate, water chestnut, gallnut, *Euphorbiaceae Mallotus* (JP-A-11-137224), a method for preventing deterioration of flavor composition by adding alpha-glucosyl rutin to a water-soluble flavor composition (JP-A-4-363395), a method for preventing deterioration natural flavor by adding chlorogenic acid to natural flavor composition (JP-A-4-345693).

Among various foods and beverages, a product containing milk is particularly susceptible to flavor and color deterioration, because riboflavin therein is excited by irradiation of light, which accelerates oxidation of sulfur-containing compounds such as methionine and cysteine in a chain-reaction manner, resulting in deterioration of flavor and color. Among the products containing milk, an acid milk-containing beverage is more susceptible to flavor deterioration than neutral milk beverages such as cow' s milk, because pH thereof may be lower than isoelectric point of milk protein and the milk protein thus tends to be solubilized, resulting in lowering of light-shielding effect which promotes light deterioration, and in exposure of sulfhydryl groups which cause oxidation.

In order to improve preservation stability of acid milk-containing beverages, there have been made proposals such as a milk-containing acid beverage containing at least two substances selected from the group consisting of L-ascorbic acid, cholecalciferol and flavonol (JP-B -3-272643), and a method for producing a milk-containing acid beverage having good preservation stability by adding one or more of rutin, morin and quercetin (JP-B-4-21450).

Recently, consumption of beverages packed in a small size PET (polyethlene terephthalate) bottle is significantly increasing. The small size PET bottle receives relatively large amount of light with respect to the amount of containing liquid. Further, in a convenience store that is the largest distribution channel of such bottled beverages, such bottles are displayed with bright lighting on a showcase. Therefore, the beverages packed in such bottles is required to have further improved anti light-deterioration property.

The small size PET bottles for packing acid milk-containing beverages have hitherto been made with green coloration out of consideration of light deterioration. However, PET bottles are recently required to be recycled for reducing wastes, and colored PET bottles are required to be collected separately from transparent PET bottles. Therefore, there is a demand to use transparent PET bottles also for packing acid milk-containing beverages.

In addition, development of commercial products with transparent glass bottles is also being performed for obtaining a variety of commercial products.

Under such circumstances in these days, there is a demand to develop technique to reduce deterioration due to light and the lapse of time, in a field of production of acid milk-containing beverages that is particularly susceptible to light deterioration and required to have a long best-before period.

In order to achieve anti-deterioration effect desired in the acid milk-containing beverages with the aforementioned anti-deterioration agents known in the prior art, the acid milk-containing beverage must contain a large amount of agents. However, in the case of the acid milk-containing beverage having white color or thin color of clear fruit juice, addition of a large amount of agents known in the prior art results in dark or yellowish coloration of the beverage, which significantly deteriorate commercial value of the product.

An object of the present invention is to provide an acid milk-containing beverage having high preservation stability in which reduction of preservation stability due to deterioration by light or the lapse of time is sufficiently prevented.

Another object of the present invention is to provide an acid milk-containing beverage having an excellent white or thin color in which reduction of preservation stability due to deterioration by light or the lapse of time is sufficiently prevented.

In order to solve the aforementioned task, the present inventors have made an extensive studies and found out that addition of a combination of a rutin substance, chlorogenic acid and a pomegranate extract to the acid milk-containing beverage susceptible to light deterioration results in a sufficient anti-deterioration effect for maintaining quality even in the aforementioned distribution manner with a large amount of light irradiation. The present inventors further found out that the sufficient anti-deterioration effect may be achieved with maintaining white or thin color of the beverage and commercial value of the product, by controlling the blending amount of the rutin substance, chlorogenic acid and the pomegranate extract, to complete the present invention.

That is, according to the present invention, there is provided an acid milk-containing beverage comprising a milk, a rutin substance, a chlorogenic acid and a pomegranate extract, and having pH of 3.0 to 5.0.

According to the present invetion, there is particularly provided the acid milk-containing beverage wherein the beverage has rutin concentration of 10 ppm or more and less than 100 ppm, chlorogenic acid concentration of 10 ppm or more and less than 50 ppm, and pomegranate extract concentration of 10 ppm or more and less than 50 ppm, wherein the sum of chlorogenic acid concentration and pomegranate extract concentration is less than 60 ppm.

The acid milk-containing beverage of the present invention contains milk, a rutin substance, chlorogenic acid and a pomegranate extract, thereby deterioration due to heat, oxygen or light with the lapse of time in terms of flavor and color is prevented.

The rutin substance for use in the present invention is a sort of flavonoids, including rutin available as pagoda tree extract, and alpha-glucosyl rutin available as "alpha G rutin" from Toyo Sugar Co., Ltd.

The blending ratio of rutin in the present beverage may preferably be 10 ppm or more for obtaining desirable anti-deterioration effect, and less than 100 ppm for preventing yellowish coloration of the beverage.

The chlorogenic acid to be added for use in the present invention may be the chlorogenic acid itself or may be in a form of a coffee extract. If the coffee extract is added, other ingredients of the coffee extract such as coffeic acid and ferulic acid are also added. It is not preferable to add an excess amount of coffee extract to the acid milk-containing beverage that poorly harmonizes with coffee odor.

The preferable blending ratio of chlorogenic acid in the present beverage may be 10 ppm or more for obtaining desirable anti-deterioration effect, and less than 50 ppm for preventing dark coloration of the beverage.

The pomegranate extract for use in the present invention may be an extract produced by extraction with water-ethanol or water. The extract may be produced, for example, by chopping a dry pericarp of a pomegranate, heating the pericarp in 50% ethanol aqueous solution at reflux for extraction, filtering off the non-soluble substance, and concentrating the filtered liquid under reduced pressure followed by freeze-drying and purification with porous synthetic resin absorber; or by adding water to the dry pomegranate pericarp, performing extraction under heat and reflux, and removing solid substances by celite filtration followed by decoloration and deodorization by stirring with activated charcoal. The pomegranate extract may preferably contain tannins such as ellagitannin, and have an ultraviolet absorption spectrum with lambda max at 366.2nm and 258.2nm.

The preferable blending ratio of the pomegranate extract in the present beverage may preferably be 10 ppm or more for obtaining desirable anti-deterioration effect, and less than 50 ppm for preventing dark coloration of the beverage.

In the present beverage, the total content of the chlorogenic acid and the pomegranate extract may desirably be less than 60 ppm, for preventing dark coloration of the beverage.

The milk contained in the present beverage may be any milks such as animal- or vegetable-derived milk. For example, animal milks such as cow's milk, goat's milk, sheep's milk, horse's milk; and vegetable milks such as soybean milk may be used. Cow's milk is usually employed. These milks may be used alone or as a mixture.

The form of the milk material is not particularly limited. For example, whole fat milk, skim milk, whey, or reconstituted milk from powdered milk or concentrated milk may be used.

The content of milk protein in the acid milk-containing beverage of the present invention may preferably be 0.035 to 5.25 mass% more preferably 0.175 to 3.5 mass % with respect to the total amount of the resulting beverage. 0.035 mass % or more milk protein may give preferable thick taste of the milk to the resulting beverage. By adjusting the milk protein content to 5.25 mass % or less, it may be possible to keep low viscosity of the resulting beverage, resulting in fresh taste of the beverage and prevention of precipitation of milk protein in the beverage.

The pH of the present acid milk-containing beverage may be in a range of pH 3.0 to 5.0. Generally, a milk-containing beverage in this pH range has a problem of deterioration such as aggregation and precipitation of milk protein. However, since the present beverage contains the aforementioned rutin substance, chlorogenic acid and pomegranate extract, it may exhibit reduced deterioration due to light and the lapse of time. Such an effect may be kept for a long period of time. The anti-deterioration effect is particularly significant as to beverages having pH of about 3.1 to about 3.9. PH of the present beverage may be adjusted by generation of an organic acid by microorganisms such as lactic acid bacteria, by addition of an organic acid such as lactic acid or citric acid or fruit juice, or by combination thereof.

The acid milk-containing beverage of the present invention may suitably contain other ingredient(s), such as those which an ordinary beverage may normally contain. In addition, the present beverage may additionally contain other anti-deterioration agents proposed in the prior art, provided that the desired effect of the present invention is not deteriorated thereby.

For example, the present beverage may contain fruit juice. When clear fruit juice such as lemon juice, grapefruit juice, muscat juice, white peach juice, apple juice and aloe juice is blended to produce an acid milk-containing product having white or thin color, it is particularly preferable that the beverage has rutin concentration of 10 ppm or more and less than 100 ppm, chlorogenic acid concentration of 10 ppm or more and less than 50 ppm, and pomegranate extract concentration of 10 ppm or more and less than 50 ppm, and the sum of chlorogenic acid concentration and pomegranate extract concentration of less than 60 ppm for preventing deterioration of commercial product value due to color deterioration, and for achieving a sufficient deterioration preventive effect. If the concentrations of these ingredients are outside these ranges, the color of the resulting acid milk-containing beverage may become dark or yellowish, which significantly deteriorate commercial product value, thus not being preferable.

Although a container for packing the present acid milk-containing beverage may be a light-shielding container such as a can, the container may preferably be a light-transmitting container in which anti-deterioration effect of the present invention is significantly exhibited. For example, the effect of the present invention is significantly exhibited upon employment of a transparent PET bottle or a transparent glass bottle which are readily recyclable. The anti-deterioration effect such as the effect against light-deterioration may also be obtained in a translucent container through which a low degree of light can pass, such as a colored PET bottle, a colored glass bottle and a paper container.

The acid milk-containing beverage of the present invention may be produced in accordance with any of publicly known methods with the step of suitably adding the rutin substance, chlorogenic acid and pomegranate extract.

The present invention will be explained in further detail with reference to the Examples and Comparative Examples. However, the present invention is not limited thereto.

### EXAMPLE 1 AND COMPARATIVE EXAMPLE 1

90 g of powdered skim milk was dissolved in 910 g of water to prepare a reconstituted milk. 980 g of granulated sugar and 91.2 g of 20% crystalline citric acid solution were added thereto for adjusting pH thereof to 3.5. Subsequently, 10 g of lemon flavor and 7333 g of water were added thereto, to prepare a blend liquid. 1130 g per test sample of the blend liquid was taken and admixed with a rutin substance (manufactured by Toyo Sugar Co., Ltd., product name "alpha G rutin"), chlorogenic acid (manufactured by T. Hasegawa Co., Ltd.) and a pomegranate extract (manufactured by Ogawa & Co., Ltd.; 20 ppm solution in 50% ethanol having absorbance of 0.14 at 366.2nm and 0.66 at 258.2nm), so that the final concentration thereof became as shown in the following Table 1.

To each of the test samples of the blend liquid, water was added so that the final total weight of each test sample became 1200 g, to obtain an acid milk-containing beverage of pH3.5. Each of the resulting acid milk-containing beverage contained 11.2Bx soluble solids and 0.9 mass % solid-non-fat, and had an acidity of 0.17%.

Each beverage thus obtained was put in transparent glass bottles. Each bottle was then air-tightly capped, heat-sterilized at 85°C for 10 minutes, and then cooled to prepare sample beverage products.

The same sample beverage products are divided in two groups, and one was then exposed to direct sunlight for three days and the other was stored in a refrigerator. The taste of the sample beverage products was compared by 10 well-trained sensory test panels in accordance with the following criteria, for sensory evaluation. The color of the sample beverages products was also observed. The results are shown in Table 1.

### <Sensory evaluation>

Taste of each sample beverage product was scored comparing with the taste of the corresponding sample beverage product stored in the refrigerator being 10 points, and with the taste of a comparative product prepared by the same procedure as the above except that none of the rutin substance, chlorogenic acid and pomegranate extract were added, and exposed to direct sunlight being 0 points. Each point in Table 1 is an average of points scored by 10 panels.

### <Standard for Color Observation>

G: color with which the commercial product value is maintained, P: color with which the commercial product value is deteriorated, VP: color with which the commercial product value is significantly deteriorated.

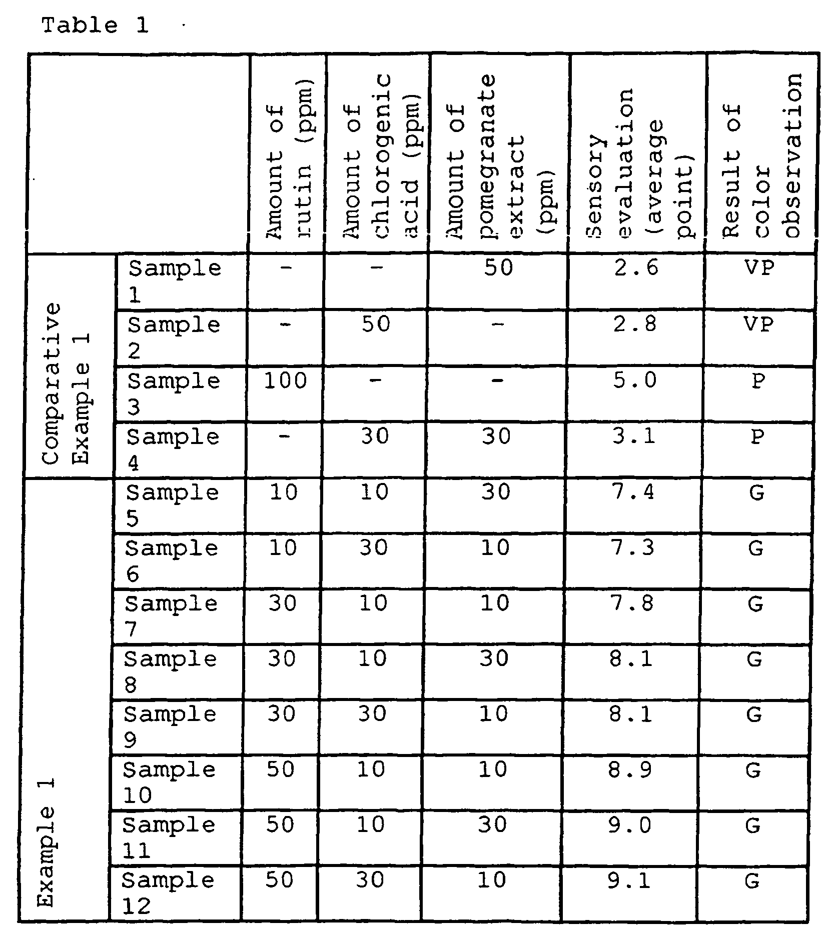

### EXAMPLE 2 AND COMPARATIVE EXAMPLE 2

135 g of powdered skim milk was dissolved in 1365 g of water to prepare a reconstituted milk. 1470 g of granulated sugar and 136.8 g of 20% crystalline citric acid solution were added thereto for adjusting pH thereof to 3.5. Subsequently, 15 g of lemon flavor and 11 kg of water were added thereto, to prepare a blend liquid. The blend liquid was divided into three aliquots, each having the same amount. Each aliquot was admixed with rutin substance (manufactured by Toyo Sugar Co., Ltd., product name "alpha G rutin"), chlorogenic acid (manufactured by T. Hasegawa Co., Ltd.) and a pomegranate extract (manufactured by Ogawa & Co., Ltd.), so that the final concentration thereof became as shown in the following Table 2.

To each aliquot of the blend liquid, water was added so that final weight of each test sample became 5 kg, to obtain an acid milk-containing beverage of pH3.5. Each of the resulting acid milk-containing beverages contained 11.2Bx soluble solids and 0.9 mass% solid-non-fat, and had an acidity of 0.17%.

Each beverage thus obtained was put in a transparent glass bottles. Each bottle was then air-tightly capped, heat-sterilized at 85°C for 10 minutes, and cooled, to prepare sample beverage products.

The same sample beverage products are divided in two groups, and one was then subjected to fluorescent lamp irradiation (with Sanyo Growth Cabinet HLR-350, illuminance of 20000 Lx, at 15°C for 14 days) and the other was stored in a refrigerator. The odor and taste of the group that had been subjected to the fluorescent lamp irradiation was compared with odor and taste of the other group that had stored in the refrigerator. The odor and taste of the group that had been subjected to the fluorescent lamp irradiation was scored by 30 sensory test panels, with the odor and taste of the corresponding control group that had not been subjected to the fluorescent lamp irradiation but stored in the refrigerator being 10 points. The results are shown in Table 2. In Table 2, Each point is an average of points scored by 30 panels.

Further, the panels were asked which of the evaluated sample beverage products they liked (in terms of palatability) the best. As a result, 23 panels out of 30 liked the sample 3 of Example 2 (p<0.01). Therefore, improvement of palatability by the present invention was confirmed.

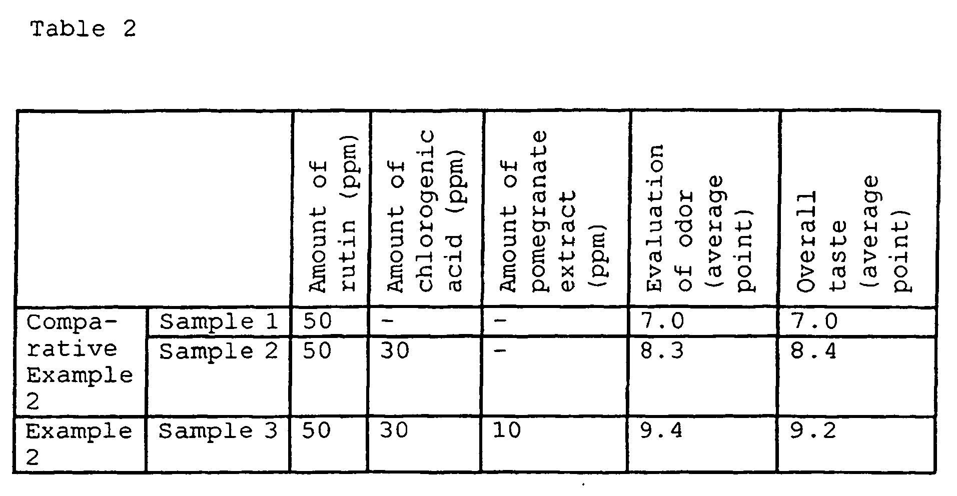

## Claims

1. An acid milk-containing beverage comprising a milk, a rutin substance, a chlorogenic acid and a pomegranate extract, and having pH of 3.0 to 5.0.

2. The acid milk-containing beverage of claim 1 wherein said beverage has rutin concentration of 10 ppm or more and less than 100 ppm, chlorogenic acid concentration of 10 ppm or more and less than 50 ppm, and pomegranate extract concentration of 10 ppm or more and less than 50 ppm, wherein the sum of chlorogenic acid concentration and pomegranate extract concentration is less than 60 ppm.

3. The acid milk-containing beverage of claim 1 or 2 wherein said rutin substance is alpha-glucosyl rutin.

4. The acid milk-containing beverage of any of claims 1 or 2 wherein said milk is cow's milk.

5. The acid milk-containing beverage of any of claims 1 or 2 wherein pH of said beverage is in a range of 3.1 to 3.9. or

6. The acid milk-containing beverage of any of claims 1 or 2 further comprising a fruit juice.

7. The acid milk-containing beverage of claim 6 wherein said fruit juice is a clear fruit juice.

8. The acid milk-containing beverage of any of claims 1 or 2 packed in a light transmitting airtight container.

## Patentansprüche

1. Saures Milch-enthaltendes Getränk, das einen pH-Wert von 3,0 bis 5,0 hat, umfassend eine Milch, eine Rutinsubstanz, eine Chlorogensäure und einen Granatapfelextrakt.

2. Das saure Milch-enthaltende Getränk nach Anspruch 1, wobei das Getränk Rutin in einer Konzentration von 10 ppm oder mehr und von weniger als 100 ppm, Chlorogensäure in einer Konzentration von 10 ppm oder mehr und von weniger als 50 ppm und Granatapfelextrakt in einer Konzentration von 10 ppm oder mehr und von weniger als 50 ppm hat, wobei die Summe aus Chlorogensäurekonzentration und Granatapfelkonzentration weniger als 60 ppm ist.

3. Das saure Milch-enthaltende Getränk nach Anspruch 1 oder 2, wobei die Rutinsubstanz alpha-Glucosylrutin ist.

4. Das saure Milch-enthaltende Getränk nach einem der Ansprüche 1 oder 2, wobei die Milch Kuhmilch ist.

5. Das saure Milch-enthaltende Getränk nach einem der Ansprüche 1 oder 2, wobei der pH-Wert des Getränks in einem Bereich von 3,1 bis 3,9 liegt.

6. Das saure Milch-enthaltende Getränk nach einem der Ansprüche 1 oder 2, ferner umfassend einen Fruchtsaft.

7. Das saure Milch-enthaltende Getränk nach Anspruch 6, wobei der Fruchtsaft ein klarer Fruchtsaft ist.

8. Das saure Milch-enthaltende Getränk nach einem der Ansprüche 1 oder 2, abgepackt in ein lichtdurchlässiges luftdichtes Behältnis.

## Revendications

1. Boisson acide contenant du lait comprenant un lait, une substance rutine, un acide chlorogénique et un extrait de grenade, et ayant un pH de 3,0 à 5,0.

2. Boisson acide contenant du lait selon la revendication 1, dans laquelle ladite boisson a une concentration en rutine de 10 ppm ou plus et inférieure à 100 ppm, une concentration en acide chlorogénique de 10 ppm ou plus et inférieure à 50 ppm, et une concentration en extrait de grenade de 10 ppm ou plus et inférieure à 50 ppm, dans laquelle la somme de la concentration en acide chlorogénique et de la concentration en extrait de grenade est inférieure à 60 ppm.

3. Boisson acide contenant du lait selon la revendication 1 ou 2, dans laquelle ladite substance rutine est l'alpha-glucosyl rutine.

4. Boisson acide contenant du lait selon l'une quelconque des revendications 1 ou 2, dans laquelle ledit lait est du lait de vache.

5. Boisson acide contenant du lait selon l'une quelconque des revendications 1 ou 2, dans laquelle le pH de ladite boisson est dans une gamme de 3,1 à 3,9.

6. Boisson acide contenant du lait selon l'une quelconque des revendications 1 ou 2, comprenant en outre un jus de fruits.

7. Boisson acide contenant du lait selon la revendication 6, dans laquelle ledit jus de fruit est un jus de fruits filtré.

8. Boisson acide contenant du lait selon l'une quelconque des revendications 1 ou 2, emballée dans un conteneur transmettant la lumière étanche à l'air.
